Europäisches Patentamt

European Patent Office

Office européen des brevets

(19)

(11) Publication number: **0 234 615**
**A1**

# (12) EUROPEAN PATENT APPLICATION

(21) Application number: 87200100.3

(22) Date of filing: 23.01.87

(51) Int. Cl.⁴: **C08L 95/00** , **C08L 53/02** ,
**//C08K5/03,C08L91/00**

(30) Priority: 28.02.86 US 835069

(43) Date of publication of application:
**02.09.87 Bulletin 87/36**

(84) Designated Contracting States:
**DE ES FR GB IT NL SE**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Gilmore, Dennis Wayne
1311 Rustic Knolls
Katy Texas 77450(US)**
Inventor: **Collins, James Henderson
16318 Espinosa Drive
Houston Texas 77083(US)**
Inventor: **Kirkpatrick, John Paxton
2010 Ashford Hollow Lane
Houston Texas 77077(US)**

(74) Representative: **Aalbers, Onno et al
P.O. Box 302
NL-2501 CH The Hague(NL)**

(54) Process for the preparation of bituminous compositions contaning block copolymers.

(57) Process for the preparation of a mixture comprising a bituminous component, a block copolymer and an additive by mixing 5-300% by weight of an aromatic additive into a solvent for the aromatic additive and containing the block copolymer and adding the mixture formed to the bituminous component.

EP 0 234 615 A1

# PROCESS FOR THE PREPARATION OF BITUMINOUS COMPOSITIONS CONTAINING BLOCK COPOLYMERS

The invention relates to a process for the preparation of a mixture comprising a bituminous component, a block copolymer and an additive. The invention further relates to a process for the preparation of a mixture containing a block copolymer and an additive. The invention also relates to articles containing said bituminous composition.

Bituminous compositions consisting of a bituminous component and a polymer have been described in the literature for use in roofing, paving and adhesive applications. Block copolymers derived from the controlled polymerization of styrene with butadiene or isoprene have the elastomeric and thermoplastic characteristics needed by the bituminous component to resist weathering. However, incompatibility between the block copolymer and the bituminous component have resulted in two-phase systems when the molten polymer and bituminous component combination is undisturbed for extended time periods.

Some processes have been proposed for stabilizing certain bituminous blends, such as the process known from U.S. patent specification 4,490,493. This known process involves stabilizing bitumen-thermoplastic polymer blends by mixing (a) 100-30% by weight of a mixture of (1) 40-99.8% by weight based on the total weight of (1), (2) and (3) of a bituminous component having a penetration of less than 800 (0.1 mm) at 25 °C; (2) 0.1-50% by weight based on the total weight of (1), (2) and (3) of a thermoplastic block copolymer having at least one monoalkenyl arene polymer block and at least one elastomeric conjugated diene block B; (3) 0.1-10.0% by weight based on the total weight of (1), (2) and (3) of an (ethylene-propylene)-styrene diblock copolymer, with (b) 0-70% by weight of a filler. This known bituminous composition may contain a solvent to facilitate the applicability of the composition. The compositions were prepared particularly by forming a pre-blend containing a bituminous component and a filler with a polymer/solvent blend. Alternatively, a solvent could be added to the pre-blend.

The above described known process has produced compositions which tend to destabilize into two-phase systems when the molten polymer/asphalt combination is left undisturbed for extended periods. Bulk phase separations have serious implications on the storage, handling and long term performance of these blends.

It is an object of the present invention to prepare bituminous mixtures with improved phase compatibility, that is to say improved compatibility of the block copolymer with the bituminous component and thereby improve the solubility of the block copolymer into the bituminous component. The improved phase compatibility leads to improved physical, weathering and performance properties of the mixtures when used in roofing, paving and adhesive applications.

Another object is to improve the mixability of the mixture.

Accordingly, the present invention provides a process for the preparation of a mixture comprising a bituminous component, a block copolymer and an additive, which process comprises the following steps:-

step (a) -mixing in the range of from 5% to 300% by weight -calculated on the weight of the block copolymer -of an aromatic additive and a block copolymer containing a first solvent for this aromatic additive and

step (b) -adding the mixture formed in step (a) to said bituminous component

The present invention involves an alternative process for compatibilizing bituminous components with block copolymers in which the order of addition is specific, viz. by preparing a pre-blend of an aromatic additive with the desired block copolymer and then adding the resultant mixture to the bituminous component. The invention is important in that by this specific process, bulk phase separation between block copolymer and bituminous component is significantly reduced, that is to say in the range of 0% to 40%, which eases handling the bituminous component. The process according to the present invention greatly improves the long term properties, including durability and weatherability of the mixtures.

The improvements in mixability and compatibility of the mixture which are obtained by this invention occur simultaneously, the preparation of the block copolymer/aromatic additive mixture in step (a) being critical. It is therefore important that the block copolymer and solvent/aromatic additive mixture be intimately mixed in a particular method. The present invention also attempts to provide for this particular method and the specific formulations where these improved characteristics occur at the same time.

Preferably, prior to step (b) solvent is removed from the mixture formed in step (a).

If desired, two different block copolymers can be included into the bituminous component, enhancing the mixability and compatibility of the bituminous component.

The aromatic additive useful in the process according to the present invention is preferably a base aromatic compound, an alkyl substituted aromatic compound, an alkenyl substituted aromatic compound, a functionalized-alkyl substituted aromatic compound, an aromatic substituted aromatic compound, a functionalized aromatic compound, a low molecular weight polymer of aromatic olefins, a complex mixture of aromatic olefins, an aromatic compound comprising heteroatoms, an aromatic processing oil, or a mixture thereof. Aromatic processing oils are most preferred; these oils are aromatic extracts obtained in refining lubricating oil fractions.

The block copolymer useful in the process according to the present invention is preferably a triblock copolymer of styrene and butadiene, a triblock copolymer of styrene and isoprene, a radial block copolymer of styrene and butadiene, a radial block copolymer of styrene and isoprene, any one of the derivatives of triblock copolymers of styrene and butadiene, derivatives of triblock copolymers of styrene and isoprene, derivatives of radial block copolymers of styrene and butadiene, derivatives of radial block copolymers of styrene and isoprene, which are obtained from selective hydrogenation, and any one of the derivatives of triblock copolymers of styrene and butadiene, triblock copolymers of styrene and isoprene, radial block copolymers of styrene and butadiene, radial block copolymers of styrene and isoprene which contain organic functional groups attached thereto.

The invention further provides a process for the preparation of a mixture containing a block copolymer and an additive, which mixture may be used in step (b) described hereinbefore, wherein said additive is dissolved in a second solvent forming a first mixture, and said block copolymer is dissolved in a first solvent forming a second mixture; and the first and second mixtures are solution blended together forming said mixture containing block copolymer and additive.

The present invention also provides an article which contains a bituminous composition prepared according to the present invention, comprising in the range of from 4 to 99% by weight of a mixture of:-

1) in the range of from 70 to 94% by weight of a bituminous component having a penetration of 20 to 800 (.1 mm) at 25 °C;

2) in the range of from 3 to 20% by weight of a first block copolymer having at least one polystyrene polymer block with at least one polybutadiene block;

3) up to 10% by weight of a second block copolymer;

4) in the range of from 3 to 20% by weight of an aromatic additive comprising a base aromatic compound, an alkyl substituted aromatic compound, an alkenyl substituted aromatic compound, a functionalized-alkyl substituted aromatic compound, an aromatic substituted aromatic compound, a functionalized aromatic compound, a low molecular weight polymer of aromatic olefins, a complex mixture of aromatic olefins, an aromatic compound comprising heteroatoms, mixtures thereof and aromatic process oils

Any block copolymer component which does not impair the plastic properties of the bituminous composition with a general configuration: A -B -(B -A)$_n$, can be used within the scope of the present invention, wherein each A is a thermoplastic polymer block of a polystyrene or a poly $\alpha$-methyl styrene, B is an elastomeric polymer block of a polybutadiene or polyisoprene and n is an integer, suitably from 1 to 4, or 8 to 20. Polymeric block A preferably has a number average molecular weight in the range of from about 10,000 to about 25,000, particularly from about 15,000 to about 22,000. Polymeric block B preferably has an average molecular weight in the range of from about 40,000 to about 80,000. The amount of polymeric block A in the block copolymer preferably ranges from about 15 to about 40% by weight, and particularly from about 25 to about 35% by weight.

Linear and branched block copolymers can be used within the scope of the invention as well as star-shaped polymers which are obtained from polyalkenyl coupling agents, such as divinylbenzene.

Suitable examples of block copolymers are Shell Kraton D 1101, Kraton D 1184, Kraton D 1102, and Kraton D 4158. "Kraton" is a trade mark for selectively hydrogenated block copolymers manufactured by Shell. Kraton D 1101 is a selectively hydrogenated styrene-butadiene-styrene linear block copolymer having a 30% by weight polystyrene block and a molecular weight of about 15,000 to about 70,000 for the respective styrene and butadiene blocks. Kraton D 1184 is a selectively hydrogenated styrene-butadiene linear block copolymer having a 30% by weight polystyrene block and respective block molecular weights of about 15,000 and about 35,000. Kraton G 1651 is a selectively hydrogenated styrene-ethylene, butylene-styrene linear block copolymer having a 33% by weight of polystyrene block and respective block molecular weights of about 30,000 to about 120,000.

Block copolymers useful within the scope of the process according to the invention may be formed by a number of different types of processes known in the art.

The block copolymers may be hydrogenated, if desired, by any suitable technique. The hydrogenation may be complete or selective.

Mixtures of block copolymers may also be used. For example, mixtures such as Shell Kraton D 1101/G 1651 and Shell Kraton D 1101/G 1650 can be used within the scope of the present invention.

Generally di, tri, or radial block copolymers of styrene and butadiene or styrene and isoprene are the preferred block copolymers useful in the process according to the invention. Derivatives of these polymers, such as those obtained by selective hydrogenation of the polymers, polymers which contain organic functional group attachments or derivatives of both polymers may be used within the scope of the invention.

The bituminous component useful in the present invention may be a bitumen of variable hardness, comparatively non-volatile, composed principally of hydrocarbons, and containing few or no crystallizable paraffins. It may be a naturally occurring bitumen or derived from a mineral oil. It may be obtained as the residue from the refining of certain petroleums. The bituminous component can be a blend of several types of bituminous substances. An example of this type of bituminous component is asphalt.

Suitable bituminous components include solid and semisolid partially hydrogenated hydrocarbons, asphaltites and asphaltic pyrobitumens. Other suitable examples of bituminous components useful within the scope of this invention include distillation or "straight-run bitumens", precipitation bitumens, e.g., propane bitumens, blown bitumens and mixtures thereof. Other suitable bituminous components include mixtures of one or more of these bitumens with extenders such as petroleum extracts, e.g., aromatic extracts, distillates or residues. Suitable bituminous components (either "straight-run bitumens" or "fluxed bitumens") are those having a penetration below 800 (0.1 mm) at 25 °C. Preference is given to the use of bitumens having a penetration of from 10 to 200 (0.1 mm) at 25 °C. Preferred bituminous components are those capable for use as aggregate binders in pavement construction, membrane raw materials for roofing and pond liners and the like.

The bituminous component to be used in the process according to the invention is preferably about 60% by weight to about 90% by weight calculated on blends of polymer and additive.

The bituminous component may contain one or more fillers. The amount of the filler or fillers may be about 0% to about 40% by weight of the bituminous component. The filler of fillers can be organic, inorganic, functionalized inorganic, or functionalized organic in nature and are known to those skilled in the art. Suitable filler or fillers which can be used within the scope of the invention include limestone, talc and various silicon fillers. Preferred amounts of filler or fillers to be used with the bituminous compound to obtain the desired results of the process according to the invention range from about 0% to about 40% of the total mixture.

Specific aromatic additives provide the desired compatibility and performance functions of the process according to the invention. The following list specifies a group of additives which are effective to accomplish the reduced phase separation of the bituminous blend and the improved physical properties of the bituminous compound. Base aromatic compounds such as naphthalene and anthracene; alkyl substituted aromatic compounds such as mesitylene, tetralin, dodecylbenzene and tert-butylbenzene; alkenyl substituted aromatic compounds such as 1,2-diphenylethylene and indene; functionalized-alkyl substituted aromatic compounds such as hydroxymethyl benzene, 4-phenylpiperidine and 1-naphthylacetic acid; aromatic substituted aromatic compounds such as biphenyl, 1,3,5-triphenyl-benzene; functionalized aromatic compounds such as phthalic anhydride, phenol, butyl phenyl ether, 1-naphthoic acid, 1-naphthyl acetate, tert-butylcatechol, and dibenzylphthalate; low molecular weight (having a molecular weight below 10,000) polymers of aromatic olefins such as alpha-methylstyrene or resins from reactions between aromatic olefins such as indene and coumarone; and complex mixtures or aromatic compounds which are found commercially in aromatic oils such as those obtained in petroleum refining are all effective in improving block copolymer/asphalt compatibility. Aromatic compounds which contain heteroatoms in the aromatic nucleus are also effective compatibilizing additives. Such additives include pyridine, thiophene, furan, pyrrole and quinoline or derivatives of these aromatic heterocyclic compounds.

The extent to which the above materials reduce phase separation can depend upon several factors, including the amount of additive used in the process according to the present invention, the inherent effectiveness of the particular aromatic additive relative to the selected polymer and selected bituminous component and the actual composition features of the block copolymer and bituminous component which are being compatibilized, and the degree of intimate mixing which occurs during blending. In order to achieve compatibility, the aromatic additive or additives may be used at levels ranging from about five weight per cent to about three hundred weight per cent of the polymer. The preferred additive use level is normally between about twenty and about one hundred per cent based on polymer weight.

A second group of additives, including organic amine emulsifiers, may be added to the mixture containing block copolymer, bituminous component and a member of the first group of additives, forming another formulation which can accomplish the new and surprising results of the process according to the invention. Members of this second group of additives function to promote emulsification and adhesion characteristics of polymer/bitumen mixtures. An example of this second group of additives is N-aminopropyloctadecylamine.

A third group of additives, antistripping agents, may be added to the mixture containing block copolymer, bituminous component and a member of first group of (aromatic) additives to form a third formulation which provides the reduced phase separation which is an object of the process according to the invention. Members of this third group of additives function to promote adhesion of polymer/bitumen mixture to aggregate or other substrates. An example of this third group of additives is N-aminoethyloctadecenylimidazoline.

The fourth group of additives can include solvents prepared from any of the listed additives.

Typical solvents which can be used within the scope of the invention include solvents which have a boiling point between about 50 °C and about 300 °C and comprise hydrocarbons, especially saturated hydrocarbons, such as hexane, cyclohexane and isopentane. A preferred solvent comprises a mixture of cyclohexane and toluene. Other solvents usable within the scope of the invention include aromatic hydrocarbons, ketones, such as methyl n-butyl ketone, methyl n-pentyl ketone, methyl ethyl ketone, cyclohexanone, diethyl ketone, acetone, or mixtures thereof.

Amounts of solvent up to about 15% by weight calculated on the total mixture of the block copolymer, bituminous component and first additive can be used. The preferred amount of solvent is about 10% by weight. Aromatic processing oils, especially those oils with aromatic component contents of 50% by weight or more, such as Dutrex 739, can be used within the scope of the invention.

A fifth group of additives include a specific group of solvents, wherein the solvent is simultaneously the additive. When the solvent is the additive, the incorporation of the copolymer/additive mixture into the bituminous component may be accomplished easily with simple and inexpensive equipment in contrast to the traditional manner of block copolymer addition which requires the use of sophisticated, expensive high shear equipment. The choice and preparation of the copolymer/additive mixture to accomplish both improved mixability and compatibility is critical.

The process according to the invention requires that a specific order of addition for the components be followed. The preferred method requires that an additive from the first group of (aromatic) additives be added to a second solvent forming a first solution, unless the additive is in itself, a solvent. Next, a polymer from the group of preferred polymers is added to a first solvent to thereby form a second solution. The two solutions are then solution blended. Thorough mixing of the two solutions is preferred. The resulting block polymer and additive mixture is then added to the bituminous component to form the desired blend with improved mixability and compatibility. It is important in the process according to the invention that all blend ingredients are not mixed together in a batch method, e.g. simultaneously, and the particular step-by-step procedure set forth above is followed.

Another method of achieving improved mixability and compatibility of the bituminous component is accomplished by adding the copolymer to a heated highly aromatic oil, such as Dutrex 739, heating the mixture to a temperature of between about 150 °C and about 190 °C and gently stirring the resultant mixture with low shear agitation for about 1.5 hours. The resulting mixture may then be cooled and cut into manageable pieces or may be pelletized. The resultant mixture has the surprising and novel increased ability to be mixed with other components and an increased durability due to reduced phase-separation of components in the mixture.

Other means of mixing such as intensive mixing which involves internal batch mixers or continuous mixers such as twin screw extruders may also be used. The subsequent let down of the mixed blend into hot asphalt can be accomplished rapidly and easily. In the laboratory, hand stirring with a spatula at temperatures of about 162 °C or higher results in a homogeneous blend in less than about 10 minutes versus the usual 45 minutes to 90 minutes required for "neat" polymer preparation using a high shear mixer.

The preferred embodiment of the present invention described hereinbefore can be modified by including an additional step wherein the solvent component can be evaporated from the block copolymer and additive mixture prior to mixing the mixture formed in step (a) with the bituminous component.

The invention is further illustrated by means of the following Examples.

## EXAMPLES AND COMPARATIVE EXPERIMENTS

The block copolymers used in the Examples and Comparative Experiments are referred to as:-
Copolymer 1 which is Shell Kraton D 1101;
Copolymer 2 which is Shell Kraton G 1651;
Copolymer 3 which is Shell Kraton D 1184;
Copolymer 4 which is a coumarone-indene resin having a molecular weight of less than 5,000 known under the trade mark "Cumar LX-509", obtained from Neville.

Four comparative experiments were performed and the results appear in Table I hereinafter under columns A, B, C and D. Since the process according to the invention provides increased compatibility. between the bituminous component and the polymer/additive mixture, the examples 1-10 hereinafter describe a method for accessing phase separations in asphalt/polymer/additive mixtures to illustrate the improved compatibility of the components in the bituminous mixture, as compared with the comparative experiments A, B, C and D. The results are tabulated in Table I.

## COMPARATIVE EXPERIMENT A

Copolymer 1 (6% by weight) was added to molten AC-10 grade asphalt simultaneously with an aromatic process oil, Shell Dutrex 739 (6% by weight). "Dutrex" is a trade mark for an aromatic extract obtained in refining lubricating oils. The polymer and aromatic oil were not premixed prior to addition to the asphalt. Mixing was achieved with a high shear laboratory mixer (Silverson DDD) at a temperature of 160-180 °C. The mixture was placed into a 0.47 l friction top can sparged with nitrogen to limit oxidation of the polymer and then capped. This container was stored in a forced air oven maintained at 160 °C. After five days of aging, this composition was examined to determine the phase separation. These results are presented in Table 1 as Comparative Experiment A.

## EXAMPLES 1 and 2

Equal parts of copolymer 1 were mixed with an aromatic process oil, Shell Dutrex 739. This mixing was accomplished by adding copolymer 1 to molten Dutrex 739 followed by agitation with a planetary mixer. The copolymer/aromatic oil mixture was added at 12% by weight to a molten AC-10 grade asphalt. This combination of materials was mixed using a Lightnin mixer at about 160-180 °C. This homogenized mixture was placed into a 0.47 l friction top can, sparged with nitrogen to limit oxidation of the polymer and then capped. The container was stored in a forced air oven maintained at 160 °C. After five days of aging, this composition was examined to determine the phase separation. These results are presented in Table I as Example 1. An identical method was used to incorporate 24% by weight of this mixture into a molten AC-10 grade asphalt. These results are presented in Table I as Example 2.

## EXAMPLE 3

Copolymer 1 and copolymer 2 were mixed with a molten aromatic process oil, Shell Dutrex 739, using a planetary mixer. The mixture was added at 24% by weight to a molten AC-10 grade asphalt and then mixed with a Lightnin mixer at 160-180 °C. The homogenized mixture was placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented in Table I as Example 3.

## EXAMPLE 4

Copolymer 1 was mixed with an excess of an aromatic process oil, Shell Dutrex 739, via planetary mixing. The resulting polymer/additive mixture was then added to a molten AC-10 grade asphalt at 15% by weight and mixed by simple spatula stirring at a temperature of 160 °C. This mixture was placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented in Table I as Example 4.

## COMPARATIVE EXPERIMENT B

Copolymer 1 was mixed with a naphthenic/paraffinic type oil, Shell Shellflex 371, via planetary mixing. The resulting polymer/additive mixture was then added to a molten AC-10 grade asphalt at 15% by weight and mixed by simple spatula stirring at a temperature of 160 °C. This mixture was placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented in Table I as Comparative Experiment B.

## EXAMPLE 5

Copolymer 1 and copolymer 3 were mixed with an aromatic process oil, Shell Dutrex 739, via planetary mixing. This mixture of copolymers and aromatic oil was then added to molten AC-10 grade asphalt at 20% by weight and mixed with a Lightnin mixer at a temperature of about 160 °C. The mixture was then placed into a 0.47 l friction top can, sparged with nitrogen to limit oxidation of the polymer and then capped. This container was stored in a forced air oven maintained at 160 °C. After five days of aging, the composition was examined to determine the phase separation. These results are presented in Table I as Example 5.

## COMPARATIVE EXPERIMENT C AND EXAMPLE 6

15% by weight of copolymer 1 and 7.5% by weight of copolymer 4 were dissolved in a solvent comprising a mixture of cyclohexane/-toluene. This solution was poured into several shallow pans and a fume hood was used to evaporate the solvent.

The resulting copolymer mixture was mixed with molten AC-10 grade asphalt at 9% by weight using a Lightnin mixer and a temperature of about 160 °C. This mixture was placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented in Table I as Comparative Experiment C. A second mixture using 18% by weight of the copolymer mixture was prepared and the results for this mixture are presented as Example 6 of Table I.

## COMPARATIVE EXPERIMENT D AND EXAMPLE 7

15% by weight of copolymer 1 and 5% by weight copolymer 4 were dissolved in a solvent comprising a mixture of cyclohexane and toluene to form a first solution. 5-300% by weight of additive was dissolved in a solvent of cyclohexane to form a second solution. The additive was an aromatic process oil, Shell Dutrex 954.

The first and second solutions were then solution blended to form a third solution. Solution blending was accomplished over a 48-hour period with the aid of a bottle roller. This solution was poured into several shallow pans and a fume hood was used to evaporate the solvent and leave the copolymer/additive mixture.

10% by weight of the copolymer/additive mixture was mixed with a molten AC-10 grade asphalt via a Lightnin mixer at about 160 °C. This mixture was placed into a 0.47 l friction top can, sparged with nitrogen to limit oxidation of the polymer and then capped. This container was stored in a forced air oven maintained at 160 °C. After five days of aging, this composition was examined to determine the phase separation.

These results are presented in Table I under Comparative Experiment D. A second mixture using 20% by weight of the copolymer/additive mixture was prepared and the results for this mixture are presented under Example 7 of Table I.

## EXAMPLE 8

13.3% by weight of copolymer 2 was dissolved in toluene to form a first solution. Copolymer 1 was added to the first solution so as to promote a mixture containing equal parts of copolymer 1 and toluene.

This copolymer/toluene mixture, in the form of a very thick paste, was added to an AC-10 grade asphalt at 12.8% by weight and then stirred with a Lightnin mixer at 160-180 °C. The homogenized asphalt mixture was then placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented under Example 8 of Table I.

## EXAMPLE 9

15% by weight of copolymer 1 was dissolved in cyclohexane to form a first solution. 5-300% by weight of additive was dissolved in toluene to form a second solution. The additive here was dioctylphthalate.

The first and second solutions were combined to form a third solution which was thoroughly mixed over a 24-hour period with the aid of a bottle roller. This solution was poured into several shallow pans and a fume hood was used to evaporate the solvent and leave the copolymer/additive mixture.

This copolymer/additive mixture was added to an AC-10 grade of asphalt at 9% by weight using a Lightnin mixer at about 160 °C. The asphalt mixture was then placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented under Example 9 of Table I.

## EXAMPLE 10

15% by weight of copolymer 1 was dissolved in cyclohexane to form a first solution. 5-300% by weight of additive was dissolved in toluene to form a second solution. The additive here was 1,3,5-triphenylbenzene.

The first and second solutions were combined to form a third solution which was thoroughly mixed over a 24-hour period with the aid of a bottle roller. This solution was poured into several shallow pans and a fume hood was used to evaporate the solvent and leave the copolymer/additive mixture.

This copolymer/additive mixture was added to an AC-10 grade of asphalt at 9% by weight using a Lightnin mixer at about 160 °C. The modified asphalt was then placed into a 0.47 l friction top can, sparged with nitrogen to limit oxidation of the polymer and then capped. This container was stored in a forced air oven maintained at 160 °C. After five days of aging, this composition was examined to determine the phase separation. These results are presented under Example 10 of Table I.

Table I

SUMMARY OF ASPHALT - POLYMER BLEND STABILIZATION DATA[1]

| | Comparative Experiment | | | | Example | | | | | | | | | |
|---|---|---|---|---|---|---|---|---|---|---|---|---|---|---|
| | A | B | C | D | 1 | 2 | 3 | 4 | 5 | 6 | 7 | 8 | 9 | 10 |
| Asphalt | 88[2] | 85[3] | 91[2] | 90[2] | 88[2] | 74[2] | 74[2] | 85[3] | 80[2] | 82[2] | 80[2] | 87.2[2] | 91 | 91 |
| Copolymer 1 | 6 | 6 | 6 | 6 | 6 | 12 | 10.8 | 6 | 6 | 12 | 12 | 6 | 6 | 6 |
| Copolymer 2 | — | — | — | — | — | — | 1.2 | — | — | — | — | 0.8 | — | — |
| Copolymer 3 | — | — | — | — | — | — | — | — | 6 | — | — | — | — | — |
| Copolymer 4 | — | — | 3 | 2 | — | — | — | — | — | 6 | 4 | — | — | — |
| Additive | 6 | 9 | — | 2 | 6 | 12 | 12 | 9 | 8 | — | 4 | — | 3 | 3 |
| Solvent | — | — | rem[5] | rem[5] | — | — | rem[5] | — | — | rem[5] | rem[5] | 6[4] | rem[5] | rem[5] |
| Aged, % in upper phase | 52 | 52 | 45 | 49 | 64 | 84 | 88 | 100 | 68 | 67 | 65 | 60 | 81 | 70 |
| Aged, % in lower phase | 48 | 48 | 55 | 51 | 36 | 16 | 12 | 0 | 32 | 33 | 35 | 40 | 19 | 30 |

1 All values reported in weight per cent
2 Shell AC-10 obtained from Wood River, Illinois refinery
3 Texaco AC-10 obtained from Port Neches, Texas refinery
4 Flashed off the toluene after adding Kraton D1101/Kraton G1651/toluene mixture to molten asphalt
5 Removed

The results of a block copolymer solvent additive mixture where improved mixability is achieved but compatibility of the system is not significantly affected is presented in column B of Table II hereinafter. Here 60% by weight of a naphthenic/paraffinic type oil, Shellflex 371 was mixed as described hereinbefore, via the procedure of Comparative Experiment B, i.e. the planetary mixer. The resulting mixture was then incorporated into a Texaco Port Neches, Texas AC-10 asphalt using low shear mixing. As shown in Table II the total mixing time required was less than 30 minutes. The results on the compatibility testing, however, showed only a slight improvement over the high shear mixed neat copolymer control.

The results of a block copolymer solvent additive mixture where improved mixability and improved compatibility are achieved simultaneously are given under Example 4 in Table I and in Table II. In Example 4 a highly aromatic extender oil was used, Dutrex 739. Again, sample preparation was identical to the case described hereinbefore. Subsequent let-down into the same asphalt cement was again achieved rapidly - (less than 10 minutes) by simple spatula stirring at a temperature of about 162 °C. The remarkable effect on compatibility is shown in Table I, no lower phase being present: The fraction of the upper phase is increased from 39% to 100%. Hence, both improved mixability and improved compatibility are demonstrated in a single copolymer solvent additive mixture.

## Table II

| Component | Summary of Asphalt/Polymer Mixing | | |
|---|---|---|---|
| | Control | B | 4 |
| Asphalt[1] | 94% | 85% | 85% |
| Block Copolymer | 6% | 6% | 6% |
| Naphthenic/Paraffinic Oil | -- | 9% | -- |
| Aromatic Oil | -- | -- | 9% |
| Solvent | none | none | none |
| Mixing time (minutes) | 90 | 20 | 7.5 |
| Type Mixing Equipment | High shear | Low shear | Low shear |

1) Paving grade AC-10 asphalt from the Texaco, Port Neches, Texas Refinery.

## COMPARATIVE EXPERIMENT E

This experiment was carried out in the same manner as Example 1 with the difference that 12% by weight of Copolymer 1 was used instead of 6% by weight of Copolymer 1 and that no additive was applied. After ageing, the percentages in the upper and lower phases were 54 and 46, respectively.

## Claims

1. A process for the preparation of a mixture comprising a bituminous component, a block copolymer and an additive, which process comprises the following steps:-

step (a) -mixing in the range of from 5% to 300% by weight -calculated on the weight of the block copolymer -of an aromatic additive and a block copolymer containing a first solvent for this aromatic additive and

step (b) -adding the mixture formed in step (a) to said bituminous component.

2. A process as claimed in claim 1, wherein prior to step (b) solvent is removed from the mixture formed in step (a).

3. A process as claimed in claim 1 or 2, wherein said aromatic additive comprises a base aromatic compound, an alkyl substituted aromatic compound, an alkenyl substituted aromatic compound, a functionalized-alkyl substituted aromatic compound, an aromatic substituted aromatic compound, a functionalized aromatic compound, a low molecular weight polymer of aromatic olefins, a complex mixture of aromatic olefins, an aromatic compound comprising heteroatoms or an aromatic process oil or a mixture thereof.

4. A process as claimed in any one of the preceding claims, wherein said block copolymer comprises a triblock copolymer of styrene and butadiene, a triblock copolymer of styrene and isoprene, a radial block copolymer of styrene and butadiene, a radial block copolymer of styrene and isoprene, any one of the derivatives of triblock copolymers of styrene and butadiene, derivatives of triblock copolymers of styrene and isoprene, derivatives of radial block copolymers of styrene and butadiene, derivatives of radial block copolymers of styrene and isoprene, which are obtained from partial hydrogenation, and any one of the derivatives of triblock copolymers of styrene and butadiene, triblock copolymers of styrene and isoprene, radial block copolymers of styrene and butadiene, radial block copolymers of styrene and isoprene which contain organic functional groups attached thereto.

5. A process as claimed in any one of claims 1 to 3, wherein said block copolymer is a linear or radial styrene-butadiene-styrene, styrene-butadiene, styrene-isoprene-styrene or styrene-ethylene butylene-styrene block copolymer.

6. A process as claimed in any one of the preceding claims wherein said aromatic additive is naphthalene, anthracene, mesitylene, tetralin, dodecylbenzene, t-butylbenzene, 1,2-diphenylethylene, indene, hydroxymethylbenzene, 4-phenylpiperidine, 1-naphthylacetic acid, biphenyl, 1,3,5-triphenylbenzene, phthalic anhydride, phenol, butyl phenyl ether, 1-naphthoic acid, 1-naphthyl acetate, t-butylcatechol, dioctylphthalate, dibenzylphthalate, polymers having a molecular weight below 10,000 of aromatic olefins, indene, coumarone, thiophene, furan, pyrrole or a quinoline aromatic process oil, or a mixture thereof.

7. A process as claimed in any one the preceding claims, wherein said bituminous component is asphalt.

8. A process as claimed in any one the preceding claims, wherein said aromatic additive is dissolved in a second solvent prior to blending said aromatic additive into said first solvent containing block copolymer.

9. A process as claimed in any one of the preceding claims, wherein the first solvent comprises an aromatic processing oil or toluene.

10. A process for the preparation of a mixture containing a block copolymer and an additive, which mixture may be used in step (b) of claim 1 wherein said aromatic additive is dissolved in a second solvent forming a first solution, and said block copolymer is dissolved in a first solvent forming a second solution; and the first and second solution are solution blended together forming said mixture containing block copolymer and aromatic additive.

11. A process as claimed in claim 10, wherein said second solvent is toluene or an aromatic processing oil.

12. An article which contains a bituminous composition prepared according to claim 1, comprising in the range of from 4 to 99% by weight of a mixture of:-

1) in the range of from 70 to 94% by weight of a bituminous component having a penetration of 20 to 800 (0.1 mm) at 25 °C;

2) in the range of from 3 to 20% by weight of a first block copolymer having at least one polystyrene polymer block with at least one polybutadiene block;

3) up to 10% by weight of a second block copolymer;

4) in the range of from 3 to 20% by weight of an aromatic additive comprising a base aromatic compound, an alkyl substituted aromatic compound, an alkenyl substituted aromatic compound, a functionalized-alkyl substituted aromatic compound, an aromatic substituted aromatic compound, a functionalized aromatic compound, a low molecular weight polymer of aromatic olefins, a complex mixture of aromatic olefins, an aromatic compound comprising heteroatoms, mixtures thereof and aromatic process oils.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 431 431 (TARMAC ROADSTONE)<br>* Claims *<br><br>--- | 1,3-7, 12 | C 08 L 95/00<br>C 08 L 53/02 //<br>C 08 K 5/03<br>C 08 L 91/00 |
| A | EP-A-0 020 203 (VIAFRANCE)<br><br>* Claims *<br><br>--- | 1,3-5, 7,12 | |
| A | GB-A-1 130 140 (SHELL)<br><br>* Claim 1; page 2, lines 25-36 *<br><br>----- | | |

| | TECHNICAL FIELDS SEARCHED (Int. Cl.4) |
|---|---|
| | C 08 L |

The present search report has been drawn up for all claims

| Place of search | Date of completion of the search | Examiner |
|---|---|---|
| THE HAGUE | 11-06-1987 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82